# EUROPEAN PATENT SPECIFICATION

(11) **EP 3 798 525 B1**
(45) Date of publication and mention of the grant of the patent: **07.05.2025**
(21) Application number: 20208285.5
(22) Date of filing: 07.05.2019
(51) Int. Cl.: F24F 3/14, F24F 8/108, F24F 11/48, F24F 11/89, F24F 11/61, F24F 11/30, B29B 9/16, F24F 110/22

(54) **METHOD AND SYSTEM FOR CONTROLLING A DEHUMIDIFIER WHEEL**
VERFAHREN UND SYSTEM ZUR STEUERUNG EINES ENTFEUCHTERRADES
PROCÉDÉ ET SYSTÈME POUR COMMANDER UNE ROUE DE DÉSHUMIDIFICATEUR

(30) Priority: 14.05.2018 IT 201800005333
(43) Date of publication of application: 31.03.2021
(62) Divisional of application: 19173140.5
(73) Proprietor: Piovan S.P.A., 30036 Santa Maria di Sala (VE) (IT)
(72) Inventor: BELLIO, Enrico, 31050 Ponzano V.to (TV) (IT); BEVILACQUA, Marco, 35010 San Giorgio delle Pertiche (PD) (IT)
(74) Representative: Luppi Intellectual Property S.r.l.

(56) References cited:
- EP-A1- 1 319 905
- WO-A1-00/11409
- WO-A1-2016/093634
- WO-A1-2017/086677
- JP-A- 2005 265 258
- JP-A- 2009 041 862

## Description

The invention relates to a method and a system for controlling a dehumidifier wheel.

In the field of air dehumidification intended to be used as a technological adjuvant for the food industry and/or as technical air for the pharmaceutical industry and/or for conditioning environments with a controlled atmosphere, using a so-called "dehumidifier wheel" for the process of dehumidifying the air is known.

The dehumidifier wheel is made of a drying material having great humidity absorbing capacity. Silica gel and zeolite are examples of this drying material.

The dehumidifier wheel has a honeycomb geometric structure. The honeycomb structure enables channels to be made through which the air traverses the dehumidifier wheel 2, and a contact surface of the drying material with the air to be increased.

In use, the dehumidifier wheel is rotated, continuously, by drive means, so that, at a given moment, a first sector of the dehumidifier wheel is traversed by a flow of "process air" and a second sector of the dehumidifier wheel, adjacent to the first sector, is traversed by a flow of "regenerating air". In particular, the sector that, at a given moment, is traversed by the flow of process air, is known as the absorption sector, whereas the sector that, at a given moment, is traversed by the flow of regenerating air is known as the regeneration sector. As disclosed below, the humidity of the flow of process air traversing the drying material is absorbed by the drying material whereas in the regeneration sector the humidity previously absorbed by the drying material is evaporated from the drying material by the flow of regenerating air.

In particular, upstream of the absorption sector a filter is present for filtering the process air entering the absorption sector and, interposed between the filter and the absorption sector, a first cooling battery is present, known as a condensing battery, having the function of saturating the process air entering the absorption sector, this in order to increase the humidity absorption capacity by the drying material, in particular when the latter is silica gel. Downstream of the absorption sector, there is a second cooling battery having the function of cooling to a desired temperature the flow of dried process air 4 exiting the absorption sector. The presence of this second cooling battery is required in particular when the dehumidifier wheel is intended to be used in the food industry, where it is opportune for the process air to have a controlled temperature to prevent undesired organoleptic modifications of the food products that are to be conditioned thermally. Also, downstream of the second cooling battery there is another filter for filtering the dried and cooled process air, before it reaches a user, for example the aforesaid food product to be conditioned thermally.

Also, upstream of the aforesaid regeneration sector, a filter is present for filtering the regenerating air entering the regeneration sector and, interposed between the filter and the regeneration sector, there is a heater arranged for heating the regenerating air before it traverses the regeneration sector.

In use, the humid process air is taken by a fan from the external environment, filtered, saturated by the first cooling battery, passed through the absorption sector, where it contacts the drying material releasing the humidity, cooled by the second cooling battery, and lastly filtered again before being used as technological adjuvant for the food industry and/or as technical air for the pharmaceutical industry and/or for conditioning environments with a controlled atmosphere. Before being used as a technological adjuvant for the food industry and/or as technical air for the pharmaceutical industry and/or for conditioning environments with a controlled atmosphere, the process air is thus filtered, dried, cooled and again filtered.

Also, in use, the regenerating air is taken by a fan from the external environment, filtered, heated, passed through the regeneration sector and discharged into the external environment. This enables the humidity present in the drying material of the regeneration sector to evaporate rapidly to make the drying material available again, following rotation, continuously, of the dehumidifier wheel, to absorb humidity in the adjacent absorption sector. The humid regenerating air exiting the regeneration sector is then discharged into the external environment.

A problem that affects the dehumidifier wheels currently used is the possible proliferation of organic substances such as moulds, bacteria, etc, in the dehumidifier wheel with consequent contamination with such organic substances of the user by the process air. For example, the proliferation of the organic substances can occur during a more or less prolonged shutdown of the dehumidifier wheel, such organic substances being then dragged into contact with the user following a restart of the dehumidifier wheel. JP 2005 265258 A **discloses a portable dehumidifier comprising a dehumidifying rotor and a regeneration heater, and provided with a sterilizing drying mode.** JP 2009 041862 A discloses a dehumidifier wheel with a control system comprising a timer configured for calculating the time elapsed since the last shut-down of the dehumidifier wheel and starting the sanitizing of the dehumidifier wheel before restarting it after a shut-down if a set time has elapsed since the last shut-down.

An object of the present invention is to improve the methods and systems for controlling dehumidifier wheels.

A further object is to provide methods and systems for controlling a dehumidifier wheel that reduce the risk of contaminating the user with organic substances following the restart of the dehumidifier wheel after a more or less prolonged shutdown.

Such objects and still others are obtained by the method according to claim 1 and the system for controlling a dehumidifier wheel according to claim 7.

The invention can be better understood and implemented with reference to the attached drawings that illustrate some embodiments thereof by way of non-limiting example, in which:
Figure 1 is a schematic view of a first embodiment of a system for controlling a dehumidifier wheel according to the invention; and
Figure 2 is a schematic view of a second embodiment of a system for controlling a dehumidifier wheel according to the invention.

In the following description, the expression "process air" will mean the air taken from the external environment intended to release the humidity contained therein to a dehumidifier wheel and to come subsequently into contact with a user, whereas the expression "regenerating air" will mean the air taken from the external environment intended to regenerate the dehumidifier wheel, i.e. intended to remove the humidity present in the dehumidifier wheel.

Also, in the following description, the term "user" will mean a product or environment intended to make use of the process air, for example a food product to be thermally conditioned, an environment with a controlled atmosphere etc.

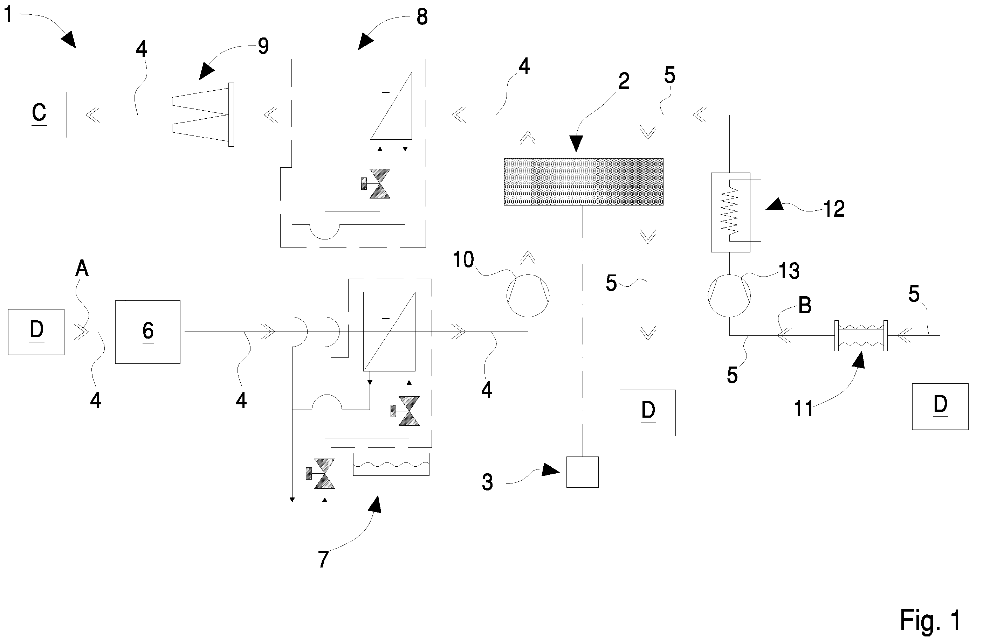

With reference to Figure 1, a control system 1 of a dehumidifier wheel 2 is shown.

The control system 1 comprises a control and management unit, which is not shown, configured for implementing the control methods for controlling the dehumidifier wheel 2 which are disclosed below.

The dehumidifier wheel 2 is made of a drying material having great humidity absorbing capacity. Silica gel and zeolite are examples of this drying material. The dehumidifier wheel 2 has a honeycomb structure, which is not shown. This honeycomb structure enables channels to be made that are not shown through which the air traverses the dehumidifier wheel 2, and a contact surface of the drying material with the air to be increased.

In use, the dehumidifier wheel 2 is rotated, continuously, by drive means 3 so that, at a given moment, a first sector of the dehumidifier wheel 2 is traversed by a flow of process air 4 and a second sector of the dehumidifier wheel 2, adjacent to the first sector, is traversed by a flow of regenerating air 5. In particular, the sector that, at a given moment, is traversed by the flow of process air 4, is known as an absorption sector, whereas the sector that, at a given moment, is traversed by the flow of regenerating air 5 is known as the regeneration sector. As already disclosed previously, the humidity of the flow of process air traversing the drying sector is absorbed by the drying material whereas in the regeneration sector the humidity previously absorbed by the drying material is evaporated from the drying material by the flow of regenerating air 5.

In particular, upstream of the absorption sector with respect to an advancement direction A of the flow of process air 4, a filtering system 6 is present for filtering the process air 4 entering the absorption sector and, interposed between the filtering system 6 and the absorption sector, a first cooling battery 7 is present, known as a condensing battery, having the function of saturating the process air 4 entering the absorption sector, this in order to increase the humidity absorption capacity of the drying material, in particular when the latter is silica gel. Downstream of the absorption sector with respect to the advancement direction A of the flow of process air 4, there is a second cooling battery 8 having the function of cooling to a desired temperature the flow of dried process air 4 exiting the absorption sector. The presence of this second cooling battery 8 is required in particular when the dehumidifier wheel is intended to be used in the food industry, where it is opportune for the process air 4 to have a controlled temperature to prevent undesired organoleptic modifications of the food products that are to be conditioned thermally. Also, downstream of the second cooling battery 8 with respect to the advancement direction A of the flow of process air 4, there is then another filter 9 for filtering the dried and cooled process air 4, before it reaches a user C. Lastly, between the first cooling battery 7 and the dehumidifier wheel 2, there is a fan 10 for sucking the process air 4 from the external environment D and conveying the process air 4 towards the dehumidifier wheel 2 and the user C. It should be noted that the position of the fan 10 is merely by way of non-limiting example.

Also, upstream of the aforesaid regeneration sector with respect to an advancement direction B of the flow of regenerating air 5, there is a filter 11 for filtering the regenerating air 5 entering the regeneration sector and, interposed between the filter 11 and the regeneration sector, there is a heater 12 intended for heating the regenerating air 5 before it traverses the regeneration sector. Also, between the filter 11 and the heater 12, there is a fan 13 for sucking the regenerating air 5 from the external environment D, conveying the regenerating air 5 to the regenerating wheel 2 and subsequently returning the regenerating air 5 to the external environment D. Also, it should be noted that the position of the fan 13 is purely by way of non-limiting example.

In use, the humid process air 4, is removed by the fan 10 from the external environment D, filtered by the filtering system 6, saturated by the first cooling battery 7, passed through the absorption sector where it contacts the drying material releasing the humidity, cooled by the second cooling battery 8, and lastly filtered again by the filter 9 before being sent to the user C. Before being used as a technological adjuvant for the food industry and/or as technical air for the pharmaceutical industry and/or for conditioning environments with a controlled atmosphere, the process air 4 is thus filtered, cooled, dried, cooled and again filtered.

Also, in use, the regenerating air 5 is removed by the fan 13 from the external environment D, filtered by the filter 11, heated by the heater 12, passed through the regeneration sector and discharged into the external environment D. This enables the humidity present in the drying material of the regeneration sector to evaporate rapidly to make the drying material available again, following rotation, continuously, of the dehumidifier wheel 2, to absorb humidity in the adjacent absorption sector. The humid regenerating air 5 exiting the regeneration sector is thus, as anticipated, discharged into the external environment D.

A first form of implementation of the control method according to the invention provides, with reference to the control system 1 shown in Figure 1, sanitizing the dehumidifier wheel 2 before restarting the dehumidifier wheel 2 following a more or less prolonged shutdown.

In this context, "sanitizing" means that set of treatments performed on the dehumidifier wheel 2 having the object of reducing the presence of organic substances, or the presence of a microbial load on the dehumidifier wheel 2.

According to the first form of implementation of the control method according to the invention, sanitizing comprises rotating the dehumidifier wheel 2 by the drive means 3, maintaining the fan 10 switched off, i.e. preventing the process air 4 from flowing into the dehumidifier wheel 2, and switching on the fan 13 and the heater 12, i.e. sending to the dehumidifier wheel 2 the regenerating air 5, filtered by the filter 11, at a set temperature T. The temperature T is comprised between 120°C and 145°C. More precisely, the temperature T is greater than and/or equal to 120°C. In particular, such a driving comprises rotating the dehumidifier wheel 2 for a number of revolutions G sufficient to ensure the complete sanitization of the dehumidifier wheel 2. The number of revolutions G is greater than 3. More precisely, the number of revolutions G is comprised between 3 and 6. In order to detect the aforesaid temperature T, a temperature sensor is provided, which is not shown, whereas in order to detect the number of revolutions G performed by the dehumidifier wheel 2, a proper sensor is provided. During rotation of the dehumidifier wheel 2 for the number of revolutions G, the regenerating air 5 that traverses the dehumidifier wheel 2 is discharged into the external environment D. The aforesaid sanitizing further provides cooling for a set time t, for example comprised between 5 minutes and 30 minutes, the dehumidifier wheel 2 and the circuitry thereof before restarting the dehumidifier wheel 2. In particular, such a cooling provides, after the number of revolutions G has been made by the dehumidifier wheel 2, also shutting down the fan 13 and the heater 12, so as to prevent also the hot regenerating air 5 from flowing into the dehumidifier wheel 2.

The time t necessary for cooling the dehumidifier wheel 2 depends on the dimensions and mass volume of drying material present. In order to speed up the restart of the dehumidifier wheel 2, this sanitizing can comprise shutting down the heater 12 and maintaining the fan 13 switched on so as to send to the dehumidifier wheel 2 a non-heated flow of regenerating air 5.

It should be noted how the method disclosed above enables the risk of contaminating the user C with organic substances to be reduced greatly. In fact, heating the dehumidifier wheel 2 to the temperature T, which is greater than the survival temperature of the organic substances to be eliminated, kills the organic substances before the dehumidifier wheel 2 is restarted, preserving the user C from any contact.

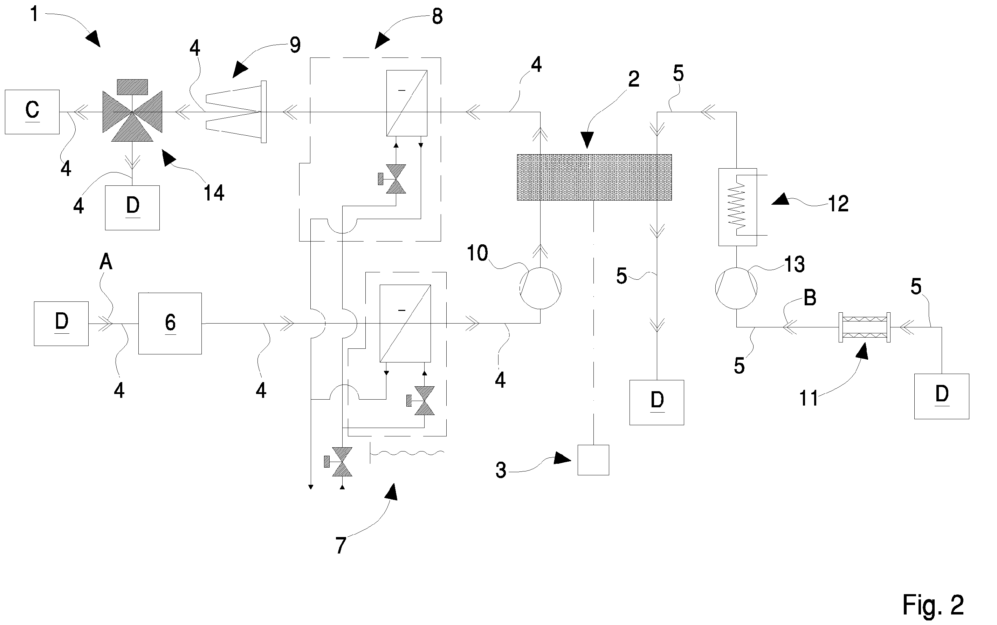

With reference to Figure 2, a control system 1 is shown for controlling a dehumidifier wheel 2 according to an alternative embodiment of the invention.

The control system 1 shown in Figure 2 differs from the system shown in Figure 1 by the fact that it provides, after the filter 9, a valve 14, for example a three-way valve, the function of which is alternatively to make the process air 4 flow to the external environment D, or to the user C.

A second form of implementation of the control method according to the invention provides, with reference to the control system 1 shown in Figure 2, sanitizing the dehumidifier wheel 2 before restarting the dehumidifier wheel 2 following a more or less prolonged shutdown.

According to second form of implementation of the control method according to the invention, sanitizing comprises rotating the dehumidifier wheel 2 by the drive means 3, positioning the valve 14 so as to make the process air 4 flow into the external environment D, switching on the fan 10, i.e. enabling the process air 4, filtered by the filter 9, to flow into the dehumidifier wheel 2 and to exit, via the valve 14 into the external environment D, and switching on the fan 13 and the heater 12, i.e. sending to the dehumidifier wheel 2 the regenerating air 5, filtered by the filter 11, at the temperature T. The temperature T is comprised between 120°C and 145°C. More precisely, the temperature T is greater than 120°C. In particular, such a driving comprises rotating the dehumidifier wheel 2 for a number of revolutions G sufficient to ensure the complete sanitization of the dehumidifier wheel 2. The number of revolutions G is greater than 3. More precisely, the number of revolutions G is comprised between 3 and 6. In order to detect the aforesaid temperature T, a temperature sensor is provided, which is not shown, whereas in order to detect the number of revolutions G performed by the dehumidifier wheel 2, a proper sensor is provided. During rotation of the dehumidifier wheel 2 for the number of revolutions G, both the process air 4 and the regenerating air 5 that traverse the dehumidifier wheel 2 are discharged into the external environment D. Upon termination of the aforesaid "sanification" cycle, there is provided positioning the valve 14 so as to make the process air 4 flow to the user C.

It should be noted how the method disclosed above with reference to the control system 1 of Figure 2 enables the risk of contaminating the user C with organic substances to be reduced greatly. In fact, heating the dehumidifier wheel 2 to the temperature T, which is greater than the survival temperature of the organic substances to be eliminated, kills the organic substances before the dehumidifier wheel 2 is restarted, preserving the user from any contact. Also, it should be noted how the method disclosed with reference to the control system 1 of Figure 2 permits the duration of the sanification cycle to be reduced with respect to the method disclosed with reference to the control system 1 of Figure 1. In fact, during the sanitizing cycle, the continuous flow of the process air 4 enables the dehumidifier wheel 2 and the circuitry thereof to be cooled rapidly. Also, it should be noted how the method disclosed with reference to the control system 1 of Figure 2 enables also the components downstream of the dehumidifier wheel 2 with respect to the advancement direction A of the process air 4, to be sanitized.

In another embodiment not included in the scope of the protection of the invention, which is not shown, the control system 1 of Figure 1 or of Figure 2 is provided with a timer. The timer enables a time to be calculated that has elapsed since the last shutdown of the dehumidifier wheel 2. In this embodiment, the method provides automatic sanitizing, according to one of the methods disclosed above, of the dehumidifier wheel 2 after a set time t1 has elapsed since the last shutdown. Also, in this embodiment of the invention, the control system 1 of Figure 1 or of Figure 2 is provided, alternatively, or additionally to the timer, with an environment humidity sensor to measure the humidity of the external environment D. In this embodiment, the method provides sanitizing automatically, according to one of the methods disclosed above, of the dehumidifier wheel 2 if the environment humidity sensor detects a humidity value of the external environment D that is greater than a set value. It should be noted how this embodiment of the invention is particularly effective in cases of particularly long periods of shutdown and/or in the case of particularly humid environments.

Lastly, the control system 1 of Figure 1 or of Figure 2 can be provided with a graphic interface to enable a "sanification" cycle to be started manually.

## Claims

1. Control method for controlling a dehumidifier wheel (2), comprising sanitizing said dehumidifier wheel (2) before restarting said dehumidifier wheel (2) after a shutdown, ***characterized in that*** said sanitizing is performed automatically if a humidity value of the external environment (D) is detected that is greater than a set value.

2. Control method according to claim 1, wherein said sanitizing comprises rotating said dehumidifier wheel (2) for a set number of revolutions (G), during said rotating said sanitizing prevents a flow of process air (4) from flowing into said dehumidifier wheel (2), and enables a flow of regenerating air (5), which is heated to a set temperature (T), to flow into said dehumidifier wheel (2).

3. Control method according to claim 2, wherein said sanitizing comprises, after said driving, cooling for a set time (t) said dehumidifier wheel (2).

4. Control method according to claim 3, wherein said cooling comprises preventing said flow of process air (4) and said flow of regenerating air (5) from flowing into said dehumidifier wheel (2).

5. Control method according to claim 3, wherein said cooling comprises preventing said flow of process air (4) from flowing into said dehumidifier wheel (2) and enabling a flow of non-heated regenerating air (5), to flow into said dehumidifier wheel (2).

6. Control method according to claim 1, wherein said sanitizing comprises rotating said dehumidifier wheel (2) for a set number of revolutions (G), during said rotating said sanitizing enables a flow of process air (4) to flow into said dehumidifier wheel (2) and to exit into an external environment (D), and enables a flow of regenerating air (5), which is heated to a set temperature (T), to flow into said dehumidifier wheel (2).

7. Dehumidifier wheel (2) control system (1), which comprises a humidity sensor configured for detecting a humidity value of the environment (D) external to said dehumidifier wheel (2), the control system (1) **characterized by** being configured for performing automatically a sanitization of said dehumidifier wheel (2) before restarting said dehumidifier wheel (2) after a shutdown if a humidity value of the external environment (D) is detected that is greater than a set value.

8. Dehumidifier wheel (2) rotatable in use continuously by drive means (3) so that, at a given moment, a first sector of the dehumidifier wheel (2) is traversed by a flow of process air (4) and a second sector of the dehumidifier wheel (2), adjacent to the first sector, is traversed by a flow of regenerating air (5), said dehumidifier wheel (2) comprising a control system (1) according to claim 7.

## Patentansprüche

1. Steuerverfahren zum Steuern eines Entfeuchterrads (2), umfassend ein Desinfizieren des Entfeuchterrads (2) vor einem Neustarten des Entfeuchterrads (2) nach einer Abschaltung, ***dadurch gekennzeichnet, dass*** das Desinfizieren automatisch durchgeführt wird, falls ein Feuchtigkeitswert der Außenumgebung (D) erkannt wird, der größer als ein festgelegter Wert ist.

2. Steuerverfahren nach Anspruch 1, wobei das Desinfizieren ein Rotieren des Entfeuchterrads (2) mit einer festgelegten Anzahl von Umdrehungen (G) umfasst, wobei das Desinfizieren während des Rotierens einen Strom von Prozessluft (4) daran hindert, in das Entfeuchterrad (2) zu strömen, und einen Strom von Regenerationsluft (5), die auf eine festgelegte Temperatur (T) erwärmt wird, in das Entfeuchterrad (2) strömen lässt.

3. Steuerverfahren nach Anspruch 2, wobei das Desinfizieren nach dem Antreiben ein Abkühlen des Entfeuchterrads (2) für eine festgelegte Zeit (t) umfasst.

4. Steuerverfahren nach Anspruch 3, wobei das Kühlen das Verhindern des Einströmens des Stroms von Prozessluft (4) und des Stroms von Regenerationsluft (5) in das Entfeuchterrad (2) umfasst.

5. Steuerverfahren nach Anspruch 3, wobei das Kühlen das Verhindern des Einströmens des Stroms von Prozessluft (4) in das Entfeuchterrad (2) und das Ermöglichen des Einströmens eines Stroms von nicht erwärmter Regenerationsluft (5) in das Entfeuchterrad (2) umfasst.

6. Steuerverfahren nach Anspruch 1, wobei das Desinfizieren das Rotieren des Entfeuchterrads (2) mit einer festgelegten Anzahl von Umdrehungen (G) umfasst, wobei das Desinfizieren während des Rotierens einen Strom von Prozessluft (4) in das Entfeuchterrad (2) strömen und in eine Außenumgebung (D) austreten lässt und einen Strom von Regenerationsluft (5), die auf eine festgelegte Temperatur (T) erwärmt wird, in das Entfeuchterrad (2) strömen lässt.

7. Steuersystem (1) für das Entfeuchterrad (2), das einen Feuchtigkeitssensor umfasst, der zum Erfassen eines Feuchtigkeitswerts der Umgebung (D) außerhalb des Entfeuchterrads (2) konfiguriert ist, wobei das Steuersystem (1) **dadurch gekennzeichnet ist, dass** es konfiguriert ist, um automatisch eine Desinfektion des Entfeuchterrads (2) durchzuführen, bevor das Entfeuchterrad (2) nach einer Abschaltung neu gestartet wird, falls ein Feuchtigkeitswert der Außenumgebung (D) erkannt wird, der größer als ein festgelegter Wert ist.

8. Entfeuchterrad (2), das in Verwendung durch Antriebsmittel (3) kontinuierlich rotierbar ist, so dass zu einem bestimmten Zeitpunkt ein erster Sektor des Entfeuchterrads (2) durch einen Strom von Prozessluft (4) durchquert wird und ein zweiter Sektor des Entfeuchterrads (2), der an den ersten Sektor angrenzt, durch einen Strom von Regenerationsluft (5) durchquert wird, das Entfeuchterrad (2) umfassend ein Steuersystem (1) nach Anspruch 7.

## Revendications

1. Procédé de commande afin de commander une roue de déshumidificateur (2), comprenant l'assainissement de ladite roue de déshumidificateur (2) avant le redémarrage de ladite roue de déshumidificateur (2) après un arrêt, ***caractérisé en ce que*** ledit assainissement est effectué automatiquement si une valeur d'humidité de l'environnement externe (D) supérieure à une valeur définie est détectée.

2. Procédé de commande selon la revendication 1, dans lequel ledit assainissement comprend la rotation de ladite roue de déshumidificateur (2) pendant un nombre déterminé de tours (G), pendant ladite rotation, ledit assainissement empêche un flux d'air de traitement (4) de s'écouler dans ladite roue de déshumidificateur (2) et permet à un flux d'air de régénération (5), qui est chauffé à une température déterminée (T), de s'écouler dans ladite roue de déshumidificateur (2).

3. Procédé de commande selon la revendication 2, dans lequel ledit assainissement comprend, après ledit entraînement, le refroidissement pendant une durée déterminée (t) de ladite roue de déshumidificateur (2).

4. Procédé de commande selon la revendication 3, dans lequel ledit refroidissement comprend l'empêchement dudit flux d'air de traitement (4) et ledit flux d'air de régénération (5) de s'écouler dans ladite roue de déshumidificateur (2).

5. Procédé de commande selon la revendication 3, dans lequel ledit refroidissement comprend l'empêchement dudit flux d'air de traitement (4) de s'écouler dans ladite roue de déshumidificateur (2) et à permettre à un flux d'air de régénération non chauffé (5) de s'écouler dans ladite roue de déshumidificateur (2).

6. Procédé de commande selon la revendication 1, dans lequel ledit assainissement comprend la rotation de ladite roue de déshumidificateur (2) pendant un nombre déterminé de tours (G), pendant ladite rotation, ledit assainissement permet à un flux d'air de traitement (4) de s'écouler dans ladite roue de déshumidificateur (2) et de sortir dans un environnement extérieur (D), et permet à un flux d'air de régénération (5), qui est chauffé à une température déterminée (T), de s'écouler dans ladite roue de déshumidificateur (2).

7. Système de commande (1) de roue de déshumidificateur (2), qui comprend un capteur d'humidité configuré pour détecter une valeur d'humidité de l'environnement (D) extérieur à ladite roue de déshumidificateur (2), le système de commande (1) étant **caractérisé par le fait qu'il** est configuré pour effectuer automatiquement un assainissement de ladite roue de déshumidificateur (2) avant de redémarrer ladite roue de déshumidificateur (2) après un arrêt si une valeur d'humidité de l'environnement extérieur (D) supérieure à une valeur définie est détectée.

8. Roue de déshumidificateur (2) rotative en utilisation continue par un moyen d'entraînement (3) de sorte que, à un moment donné, un premier secteur de la roue de déshumidificateur (2) est traversé par un flux d'air de traitement (4) et un second secteur de la roue de déshumidificateur (2), adjacent au premier secteur, est traversé par un flux d'air de régénération (5), ladite roue de déshumidificateur (2) comprenant un système de commande (1) selon la revendication 7.
